# EUROPÄISCHE PATENTSCHRIFT

(11) **EP 1 794 030 B1**
(45) Veröffentlichungstag und Bekanntmachung des Hinweises auf die Patenterteilung: **09.11.2011**
(21) Anmeldenummer: 05785202.2
(22) Anmeldetag: 21.09.2005
(51) Int. Cl.: B60R 9/04

(54) **DACHTRÄGERSYSTEM FÜR EIN FAHRZEUG**
ROOF RACK SYSTEM FOR A MOTOR VEHICLE
SYSTEME DE GALERIE POUR VEHICULE

(30) Priorität: 24.09.2004 DE 102004047565; 15.10.2004 DE 102004050966
(43) Veröffentlichungstag der Anmeldung: 13.06.2007
(73) Patentinhaber: Hans und Ottmar Binder GmbH Oberflächenveredelung, 89558 Böhmenkirch (DE)
(72) Erfinder: BINDER, Hans, 89558 Böhmenkirch (DE); BINDER, Ottmar, 89558 Böhmenkirch (DE)
(74) Vertreter: Grosse, Rainer
(86) Internationale Anmeldenummer: PCT/EP2005/010201
(87) Internationale Veröffentlichungsnummer: WO 2006/032476

(56) Entgegenhaltungen:
- EP-A- 0 780 267
- DE-A1- 3 123 106
- DE-A1- 10 239 022
- DE-U1- 8 621 340
- FR-A- 2 832 369
- PATENT ABSTRACTS OF JAPAN Bd. 008, Nr. 037 (M-277), 17. Februar 1984 (1984-02-17) & JP 58 194642 A (ARAKAWA SHIYATAI KOGYO KK), 12. November 1983 (1983-11-12)

## Beschreibung

Die Erfindung betrifft ein Dachträgersystem für ein Fahrzeug, insbesondere für einen Personenkraftwagen.

Personenwagen können auf ihrem Dach ein Dachträgersystem in Form einer Dachreling oder einer Dachleiste besitzen. Diese Dachträgersysteme bestehen aus insbesondere zwei, parallel zueinander angeordneten Halteeinrichtungen, wobei im Zuge der vorliegenden Patentanmeldung unter einer Dachreling ein System mit endseitigen Fußteilen und gegebenenfalls Mittelfüßen zu verstehen ist, d.h., das System befindet sich aufgrund der Fußteile und der Mittelfüße mit Abstand zum Dach des Fahrzeugs. Unter den erwähnten Dachleisten wird ein System verstanden, das keine Fußteile und Mittelfüße aufweist, d.h., die Dachleisten verlaufen demgemäß direkt auf der Oberseite des Dach des Fahrzeugs. Vorzugsweise können zwischen den beiden mit Abstand zueinander verlaufenden Dachrelingelemente oder Dachleistenelemente Querstreben befestigt werden, um weitere Abstützungs- und Tragmöglichkeiten zur Befestigung einer Dachlast auf dem Fahrzeug zu schaffen.

Da ein derartiges Dachträgersystem am Dach des Fahrzeugs zu befestigen ist, wird mittels einer Befestigungseinrichtung eine Verbindung zu Tragteilen im Dach des Fahrzeugs hergestellt. Dies erfolgt üblicherweise bei der Produktion des Fahrzeugs, d.h., die hier erwähnten Dachträgersysteme sind üblicherweise dem Fahrzeug von Anfang an zugeordnet und werden bei der Benutzung des Fahrzeugs nicht demontiert. Die Erfindung befasst sich mit derartigen Systemen, umfasst jedoch auch mögliche Systeme, die nach Bedarf montiert oder demontiert werden können. In jedem Falle ist es erforderlich, die Befestigung des Dachträgersystems am Fahrzeugdach mit einer Befestigungseinrichtung vorzunehmen, die mit Befestigungsbolzen die Dachhaut durchgreift und mit entsprechenden Dachtragteilen verbunden wird. Das Durchgreifen der Dachhaut birgt die Gefahr, dass Feuchtigkeit in das Fahrzeugdach eindringen kann.

Aus der FR-A-2 832 369 geht ein Dachträgersystem für ein Fahrzeug hervor, das einen Dachträger aufweist, der mit einer Befestigungseinrichtung auf dem Dach eines Fahrzeugs festlegbar ist, wobei die Befestigungseinrichtung zum Durchgreifen von einer Dachöffnung einen Befestigungsbolzen aufweist, dem eine Dichtung zugeordnet ist.

Der Erfindung liegt die Aufgabe zugrunde, ein Dachträgersystem der eingangs genannten Art anzugeben, das zu keinen Feuchtigkeitsproblemen führt und einfach und sicher montiert werden kann.

Diese Aufgabe wird gelöst durch ein Dachträgersystem der genannten Art, das mindestens einen Dachträger aufweist, der eine Befestigungseinrichtung zur Festlegung auf dem Dach des Fahrzeugs aufweist, die zum Durchgreifen von mindestens einer Dachöffnung mindestens einen Befestigungsbolzen besitzt, dem eine sich um den Befestigungsbolzen erstreckende und sich bei montiertem Dachträger am Dach abstützende und dabei die Dachöffnung umgebende Dichtung zugeordnet ist, welche einer Tragplatte zugeordnet ist, die eine Bolzenöffnung aufweist, welche vom Befestigungsbolzen durchsetzt wird, wobei die Tragplatte axial unverschiebbar oder axial nur in einer Verschiebezone verschiebbar an dem Befestigungsbolzen festgelegt ist. Diese Dichtung ist somit dem Befestigungsbolzen zugeordnet. Hierunter wird verstanden, dass sie sich in einer Zone nahe dem Befestigungsbolzen befindet, also nicht weitläufig entfernt zum Befestigungsbolzen liegt und sich auch nicht -ausgehend vom Befestigungsbolzen- bis in einen Bereich erstreckt, der weit entfernt vom Befestigungsbolzen liegt. Hierdurch ist sichergestellt, dass die Dichtung stets vollständig und sauber dichtend am Dach des Fahrzeugs anliegt, so dass Wellenbildungen oder dergleichen der Dichtung verhindert sind, die dazu führen können, dass Spalte entstehen, in die dann Feuchtigkeit, Schmutz und dergleichen eindringen kann. Die Dichtung erstreckt sich um den Befestigungsbolzen herum, so dass allseitig eine Barriere geschaffen ist, wobei sie die Dachöffnung dabei umgibt, d.h., die Öffnung im Dach des Fahrzeugs wird allseitig durch Anlage der Dichtung am Fahrzeugdach gegen äußere Einflüsse, insbesondere das Eindringen von Feuchtigkeit, geschützt. Unter dem erwähnten Befestigungsbolzen muss nicht ein im Querschnitt kreisförmiger Bolzen verstanden werden, sondern es können auch andere Befestigungsbolzen, die beliebige Querschnittsprofile aufweisen, zum Einsatz kommen. Die Dichtung ist einer Tragplatte zugeordnet, die vom Befestigungsbolzen durchsetzt wird. Die Tragplatte verleiht der Dichtung Stabilität, d.h., sie bildet eine Halteeinheit für die Dichtung, so dass die Dichtung eine gewünschte Position relativ zum Befestigungsbolzen einnimmt und diese auch beibehält. Die Tragplatte weist eine Bolzenöffnung auf, die von dem Befestigungsbolzen durchsetzt wird. Mithin durchsetzt der Befestigungsbolzen die Bolzenöffnung, so dass die Tragplatte als eine Art Unterlegscheibe angesehen werden kann, an der sich die Dichtung befindet, welche mit der Dachhaut des Fahrzeugs zusammenwirkt. Die Tragplatte ist unverschiebbar oder axial nur in einer Verschiebezone verschiebbar an dem Befestigungsbolzen festgelegt. Dies hat zur Folge, dass sie unverlierbar am Tragbolzen gehalten ist, so dass bei den Montagearbeiten keine besondere Vorsicht aufgebracht werden muss, da die Tragplatte nicht vom Befestigungsbolzen herunterrutschen kann. Ferner führt die erwähnte axiale Festlegung der Tragplatte am Befestigungsbolzen dazu, dass sie eine bestimmte Relativposition zum Tragbolzen einnimmt, die wünschenswert ist.

Bevorzugt handelt es sich bei der Dichtung um eine Ringdichtung, d.h., es liegt ein geschlossener Ring vor, wobei der Ring einen beliebigen Grundriss aufweisen kann, so ist es möglich, dass er Kreisform besitzt oder oval oder stadionförmig ausgestaltet ist. Auch ist es denkbar, dass eine Mehreckkontur, beispielsweise eine quadratische Kontur oder eine Rechteckkontur vorliegt.

Insbesondere ist die Tragplatte als Metallblechplatte, bevorzugt als Edelstahlblechplatte ausgebildet. Eine besondere einfache Herstellung ist dann geben, wenn die Tragplatte als Blechstanzteil ausgebildet wird.

Die Dichtung ist bevorzugt an der Unterseite der Tragplatte angeordnet, insbesondere in einer umlaufenden Randzone der Tragplatte, wobei beliebige Befestigungen gewählt werden können, um die Dichtung an der Tragplatte zu halten. So ist es beispielsweise möglich, die Dichtung mit der Tragplatte zu verkleben. Die Dichtung kann jedoch auch mit der Tragplatte verrastet sein, beispielsweise dadurch, dass sie eine Nut aufweist, die den Rand der Tragplatte umgreift. Auch andere Verrastungsmöglichkeiten oder Befestigungsmöglichkeiten können realisiert werden.

Die erwähnte Festlegung der Tragplatte am Befestigungsbolzen kann bevorzugt mittels einer Querschnittsverdickung des Befestigungsbolzens erfolgen. Die Querschnittsverdickung ist größer als der Durchmesser der Bolzenöffnung, so dass ein axialer Halt gegeben ist. Die Querschnittsverdickung kann mittels eines separaten, an dem Schaft des Befestigungsbolzens festgelegten Kragenelements erfolgen oder es wird die Querschnittsverdickung am Befestigungsbolzen einstückig ausgebildet, was beispielsweise durch einen Stauchvorgang oder dergleichen erfolgen kann. Bei dem Befestigungsbolzen handelt es sich vorzugsweise um einen Stehbolzen, insbesondere ein Gewindestehbolzen.

Der Befestigungsbolzen weist insbesondere ein Halteelement auf, das am Dachträger befestigt ist oder befestigbar ist. Insbesondere ist vorgesehen, dass das Halteelement ein Nutenstein ist, der in eine entsprechende Nut der Dachträgerschiene eingeschoben wird. Hier durch werden Nutbereiche, die eine Haltezone bildet, vom Nutenstein hintergriffen, so dass der Gewindebotzen axial festgelegt ist Der Befestigungsbolzen kann insbesondere mittels eines Gewindes am Halteelement befestigt sein. So ist es vorteilhaft, wenn der Befestigungsbolzen an seinem einen Endbereich ein Gewinde aufweiset, das in eine Gewindebohrung des Nutensteins eingeschraubt ist Der andere Endbereich des Befestigungsbolzens weist bevorzugt ebenfalls ein Gewinde auf, auf den ein Mutterelement aufgeschraubt werden kann, um die Dachreling oder die Dachschiene auf dem Autodach zu befestigen, d.h., das Mutterelement stützt sich dabei an der Dachtragkonstruktion des Fahrzeugs ab, wodurch -in Richtung der Befestigungsbolzen- das Dachträgersystem festgespannt wird, wobei es mit einer derartigen Kraft gegen die Dachaußenhaut anliegt, dass das die Dachaußenhaut bildende Karosserieblech nicht unzulässig verformt wird. Das Dachträgersystem wird somit mittels der Befestigungsbolzen am Dachtragsystem des Fahrzeugs mit der notwendigen Spannkraft befestigt, während die erwähnte Anlage der Unterseite des Dachträgersystems an der Dachhaut von geringerer Kraft ist, um keine Verformung des Blechs des Autodachs herbeizuführen, wobei dennoch die erfindungsgemäße Dichtung hinreichend Druck ausüben muss, um das Eindringen von Feuchtigkeit und dergleichen zu vermeiden.

Insbesondere kann vorgesehen sein, dass der Grundriss der Tragplatte größer als die Grundrissfläche des Halteelements ist, mit der sich dieses an der Tragplatte direkt oder indirekt abstützt. Bei einem direkten Abstützen liegt das Halteelement direkt an der Tragplatte an. Liegt eine indirekte Abstützung vor, so ist hierunter zu verstehen, dass sich zwischen Halteelement und Tragplatte noch mindestens ein weiteres Element befindet, beispielsweise eine Zusatzdichtung, insbesondere in Form einer Foliendichtung, auf die nachstehend noch näher eingegangen wird. Da der Grundriss der Tragplatte größer ist als die Beaufschlagungsfläche durch das Halteelement, liegt die sich bevorzugt in der umlaufenden Randzone der Tragplatte befindlichen Dichtung oder sich bis dorthin erstreckenden Dichtung mit einem gewissen Abstand zum Schaft des Befestigungsbolzens und gegebenenfalls auch mit radialem Abstand zur Beaufschlagungsfläche durch das Halteelement (oder versetzt zur dieser), mit der Folge, dass die Tragplatte selber eine Federeigenschaft entfaltet kann. Beim Festspannen des Dachträgersystems auf dem Dach des Fahrzeugs ist ein "Zerdrücken" der Dichtung verhindert, denn die Kraft, mit der das Halteelement gegen die Dachtragkonstruktion verspannt ist, wird vom Kragenelement des Befestigungsbolzens und/oder von der Unterseite der Tragplatte aufgenommen, nicht jedoch in vollem Umfang auf die Dichtung übertragen. Hinzu kommt, dass sich die Tragplatte in ihrer Randzone axial aufgrund ihrer Elastizität verlagern kann. Dort befindet sich auch die Dichtung beziehungsweise befinden sich dort Bereiche der Dichtung, mit der Folge, dass hier geringere Kräfte wirken, die dennoch groß genug sind, um einen sicheren Feuchtigkeitseindringensschutz zu schaffen.

Im montierten Zustand beaufschlagt der Nutenstein die Oberseite der Tragplatte direkt, d.h., es liegt hier ein direkter Kontakt der beiden Elemente vor oder indirekt, d.h., es befindet sich dort ein Zwischenelement, insbesondere die erwähnte Zusatzdichtung. Die Zusatzdichtung ist bevorzugt an der Oberseite der Tragplatte befestigt, insbesondere dort aufgeklebt oder aufgespritzt.

Auch die Zusatzdichtung kann als Ringdichtung, also Zusatzringdichtung, ausgebildet sein. Sie kann an der umlaufenden Randzone der Tragplatte, insbesondere an deren Oberseite, angeordnet sein. Die Zusatzdichtung kann jedoch alternativ insbesondere als Follendichtung, bevorzugt als vollflächige Foliendichtung ausgebildet sein.

Dichtung und Zusatzdichtung bilden getrennte Dichtungen. Alternativ ist es jedoch auch möglich, dass die Dichtung und die Zusatzdichtung eine gemeinsame Dichtung bilden. Dies ist insbesondere dann denkbar, wenn die gemeinsame Dichtung die Randkante der Tragplatte umgreift, so dass auf der Unterseite und der Oberseite der Tragplatte jeweils ein Dichtungsring der gemeinsamen Dichtung ausgebildet ist Der eine Dichtungsring wirkt mit dem Halteelement zusammen und der andere Dichtungsring mit der Dachhaut

Insbesondere ist vorgesehen, dass das Halteelement auf seiner der Tragplatte zugewandten Seite eine Ringvertiefung aufweist, die um den Befestigungsbolzen herum verläuft und in der die Zusatzdichtung derart einliegt oder dort befestigt ist, dass sie im entspannten Zustand die der Tragplatte zugewandte Seite des Halteelements überragt. Wird beim Festspannen des Dachträgersystems auf dem Fahrzeugdach vom Halteelement, insbesondere vom Nutenstein, eine Kraft auf die Tragplatte übertragen, so wird hierdurch die Zusatzdichtung in die Ringvertiefung zurückgedrängt und insoweit eine Dichtwirkung erzielt. Die Zusatzdichtung wird aufgrund ihrer vertieften Lage in der Ringvertiefung vor einem Zerquetschen geschützt.

Zur Befestigung des Halteelements ist es vorteilhaft, wenn dieses als Nutenstein ausgebildet und in ein Aufnahmenut des Dachträgers eingeschoben ist. Vorstehend und nachstehend wird zumeist nur von einem Befestigungsbolzen und einem Halteelement, insbesondere Nutenstein, sowie einer Aufnahmenut und so weiter gesprochen. Bevorzugt weist die Befestigungseinrichtung zum Festlegen des Dachträgersystems auf dem Dach des Fahrzeugs jedoch mehrere Befestigungsbolzen und so weiter auf. Diese liegen über die Längserstreckung der Dachreling beziehungsweise Dachleiste beabständet verteilt beispielsweise sind vier Befestigungsbolzen vorgesehen, wobei sich zwei in den Endbereichen der Dachleiste und zwischen diesen beiden zwei weitere befinden, wobei die Befestigungsbolzen voneinander etwa gleiche Abstände aufweisen.

Zum Schließen einer Spaltzone zwischen der Unterseite des Dachträgers und der Dachhaut ist bevorzugt eine elastische Unterlage vorgesehen. Dies kann an der Unterseite des Dachträgers befestigt, beispielsweise dort verklebt sein. Die Anordnung ist bevorzugt derart getroffen, dass die Dicke der Dichtung und/oder der Zusatzdichtung größer als die Dicke der elastischen Unterlage ist. Dies bedeutet, dass die Dichtung eine größere Dicke als die Unterlage aufweist oder dass die Zusatzdichtung eine größere Dicke als die Unterlage aufweist oder dass die Summe aus der Dicke der Dichtung und der Zusatzdichtung größer ist als die Dicke der elastischen Unterlage. Stets ist dabei sichergestellt, dass bei der Montage die Dichtung oder Zusatzdichtung somit hinsichtlich einer Kontaktgabe "vorauseilt", d.h., sie berührt zum Beispiel bereits die Dachhaut, wenn noch kein festes Verspannen erfolgt ist, wenn also die Unterlage noch nicht entsprechend gegen die Dachhaut durch Anziehen der Befestigungseinrichtung gespannt ist. Hierdurch ist sichergestellt, dass die erfindungsgemäße Dichtung und/oder Zusatzdichtung stets ihre Dichtfunktion einwandfrei ausüben kann und das möglicherweise eine geringfügige Wellenbildung oder dergleichen der Unterlage nicht dazu führt, dass Feuchtigkeitsundichtigkeiten bei der Befestigungseinrichtung entstehen.

Wie bereits erwähnt, kann der Dachträger als mindestens eine Dachleiste oder als Dachreling ausgebildet sein, wobei die Dachleiste direkt der Dachhaut zugeordnet ist und die Dachreling Fußstreben und gegebenenfalls auch Mittelfuße aufweist. Insbesondere sind jedem Fahrzeug zwei Dachrelirigelemente beziehungsweise zwei Dachleistenelemente zugeordnet, wobei sie parallel zueinander verlaufen und sich im rechten und linken Dachseitenbereich befinden, wobei ihre Längserstreckung zu der Fahrzeuglängserstreckung parallel verläuft.

Schließlich kann vorgesehen sein, dass die Dichtung und/oder die Zusatzdichtung und/oder die elastische Unterlage aus Kunststoff, Gummi oder anderen, elastischen, dichtenden, nicht verwitterten Materialien, insbesondere aus Neopren und/oder Dichtfolie besteht/bestehen.

Die Zeichnungen veranschaulichen die Erfindung anhand eines Ausführungsbeispiels und zwar zeigt:
- Figur 1: einen Abschnitt eines Fahrzeugs, mit einer Dachleiste eines Dachträgersystems, wobei sich die Dachleiste in einen Zwischenzustand bei der Montage befindet,
- Figur 2: einen Querschnitt durch das Autodach mit teilweise dargestellter, montierter Dachleiste,
- Figur 3: eine perspektivische Unteransicht auf den Endbereich der Dachleiste in einem Montage-Zwischenzustand,
- Figur 4: die Darstellung der Figur 3 in vormontierten Zustand, teilweise aufgeschnitten,
- Figur 5: eine Seitenansicht auf eine Befestigungseinrichtung für die Dachleiste,
- Figur 6: eine perspektivische Ansicht der Darstellung der Figur 5,
- Figur 7: die Unterseite des Endbereichs der Dachleiste ohne Befestigungseinrichtung und
- Figur 8: eine weitere Ausführungsform einer Befestigungseinrichtung.

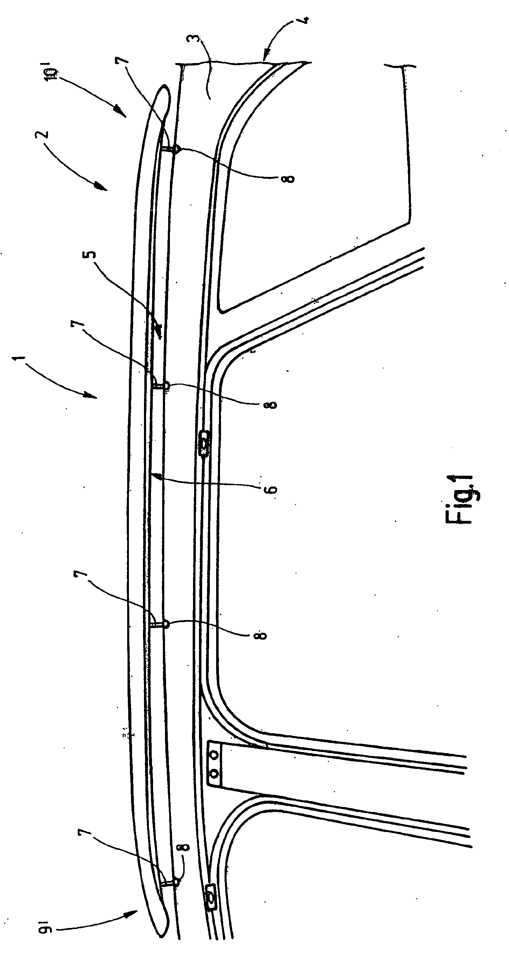

Die Figur 1 zeigt eine Dachleiste 1 eines Dachträgersystems 2, die dem Dach 3 eines teilweise dargestellten Personenkraftwagen 4 zugeordnet wird. Die Dachleiste 1 ist als einstückige Dachleiste 1 ausgeführt. Sie wird mittels einer Befestigungseinrichtung 5 an der Außenseite des Daches 3 gehalten.

Die Figur 1 zeigt einen Zwischenmontagezustand, in dem die Unterseite 6 der Dachleiste 1 noch einen Abstand zur Außenseite des Personenkraftwagens 4 einnimmt, so dass erkennbar ist, dass von der Dachleiste 1 vier über ihre Länge verteilte Befestigungsbolzen 7 ausgehen, die Dachöffnungen 8 des Dachs 3 durchgreifen. Auf die Enden der Befestigungsbolzen 7 werden Mutterelemente aufgeschraubt, so dass die Dachleiste 1 fest mit einer Dachunterkonstruktion verbunden werden und die Unterseite 6 mit leichtem Druck auf der Außenseite des Dachs 3 aufliegt, ohne dass jedoch die als lackiertes Blech ausgebildete Dachhaut dabei unzulässig verformt wird. Der aus der Figur 1 ersichtliche Spalt zwischen der Dachleiste 1 und dem Dach 3 ist im Endmontagezustand nicht mehr vorhanden. Es ist aus der Figur 1 erkennbar, dass die Endbereiche 9', 10' der als Hohlprofil ausgebildeten, einstückigen Dachleiste 1 leicht bogenförmig unter Verringerung des Querschnitts der Dachleiste 1 verlaufen, so dass eine ästhetische und für den Fahrtwind strömungsgünsteige Ausgestaltung vorliegt Auf dem Dach 3 des Personenkraftwagens 4 werden vorzugsweise zwei Dachleisten 1, jeweils eine in einem der beiden Fahrzeugseitenbereiche des Daches, montiert.

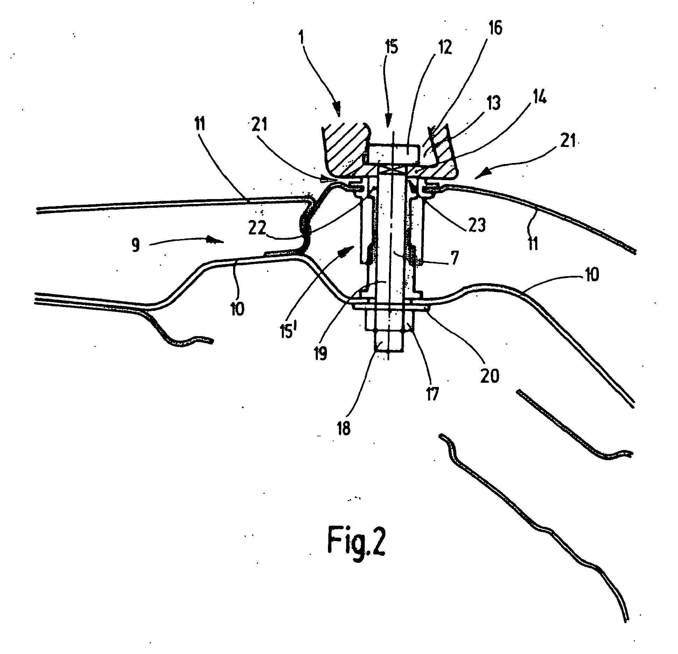

Die Figur 2 verdeutlicht die Dachünterkonstruktion 9, die ein Tragblech 10 aufweist, das unterhalb der Dachhaut 11 verläuft. Die Dachleiste 1 ist in der Figur 2 nur bereichsweise dargestellt. Es ist erkennbar, dass sich ein Halteelement 12 im Innern einer Aufnahme 13 der Dachleiste 1 befindet, wobei eine Haltezone 14 der Dachleiste 1 von dem Halteelement 12 hintergriffen wird. Das Halteelement 12 ist mit dem Befestigungsbolzen 7 verbunden, der in einer Führung 15' lagert, die sich zwischen der Dachhaut 11 und dem Tragblech 10 befindet. Das Halteelement 12 ist vorzugsweise als Nutenstein 15 ausgebildet, wobei die Aufnahme 13 eine Aufnahmenut 16 bildet, in die der Nutenstein 15 in axialer Richtung der Dachleiste 1 eingeschoben ist. Mittels eines Mutterelements 17, das auf einen Gewindeabschnitt 18 des Schaftes 19 des Befestigungsbolzen 7 unter Zwischenschaltung einer Unterlegscheibe 20 aufgeschraubt ist, wird die Dachleiste 1 an dem Tragblech 10 der Dachunterkonstruktion 9 befestigt, wobei die Führung 15' zur Spannkraftaufnahme dazwischengeschaltet ist und überdies einen Abstandshalter zwischen der Dachhaut 11 und dem Tragblech 10 bildet. Mithin wird die volle axiale Spannkraft des Befestigungsbolzen 7 nur auf die Dachleiste 1 ausgeübt, nicht jedoch auf die leicht verformbare, aus lackiertem Blech bestehende Dachhaut 11.

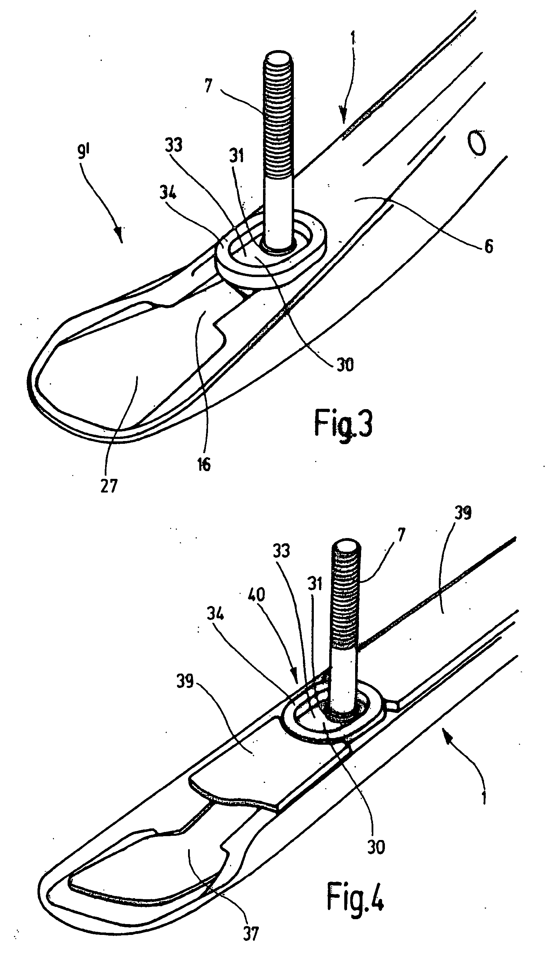

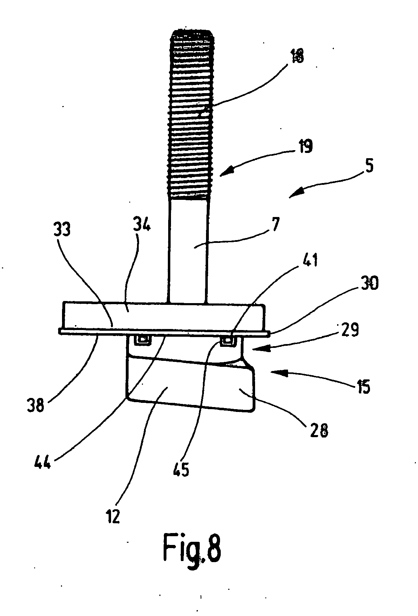

Um nun sicherzustellen, dass gemäß der beiden Pfeile 21 keine Feuchtigkeit und kein Schmutz in die Dachöffnung 22 gelangen kann, die von dem Befestigungsbolzen 7 durchsetzt wird, ist an der Stelle, auf die in der Figur 2 mit dem Pfeil 23 hingewiesen wird, mindestens eine Dichtung vorgesehen, die jedoch aus der Figur 2 nicht hervorgeht, jedoch in den Figuren 3 bis 6 sowie in Figur 8 gezeigt ist.

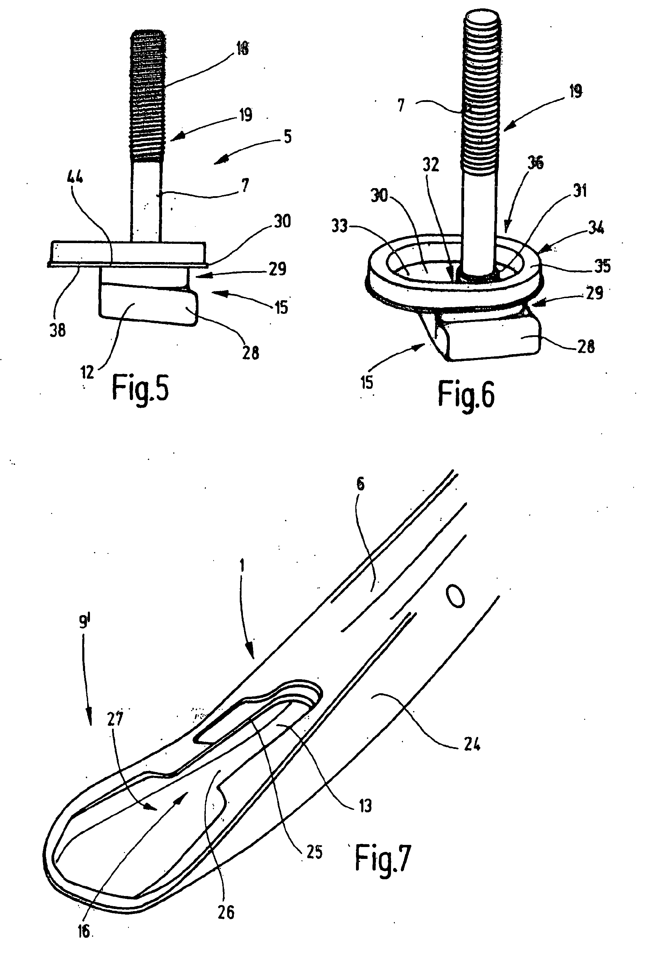

Die Figur 7 zeigt die Unterseite 6 der Dachleiste 1 im Bereich des Endes 9'. Die Dachleiste 1 ist als Hohlprofil 24, vorzugsweise im Strangpressverfahren, hergestellt, wobei sie im Innern eine Zwischenwand 25 aufweist, sodass unterhalb der Zwischenwand 25 und der Innenseite der Außenwand 26 die Aufnahme 13 ausgebildet ist, weiche eine Aufnahmenut 16 bildet. Die Aufnahmenut 16 erweitert sich zum Ende der Dachleiste hin, sodass hier eine Einfädelöffnung 27 ausgebildet wird. Die Befestigungseinrichtung 5 der Figur 5 lässt sich zur Erzeugung von verlagerbaren Stehbolzen an der Dachleiste 1 befestigen, wobei die Befestigungseinrichtung 5 dazu dient, die Dachleiste 1 am Dach 3 des Personenkraftwagens 4 zu befestigen.

Die Befestigungseinrichtung 5 weist gemäß der Figuren 5 und 6 den Befestigungsbolzen 7 mit endseitigem Gewindeabschnitt 18 auf. Ferner ist das gegenüberliegende Ende des Befestigungsbolzens 7 ebenfalls mit einem Gewinde versehen, dass in eine Gewindebohrung des Halteelements 12 eingeschraubt ist. Das Halteelement 12 ist als konturierter Nutenstein 15 ausgebildet, der einen Kopf 28 und eine schlankere Taille 29 aufweist. Eine aus Federstahlblech bestehende Tragplatte 30 ist auf den Schaft 19 des Befestigungsbolzens 7 derart aufgeschoben, dass sie in Kontakt mit der Unterseite der Taille 29 des Nutensteins 15 tritt. Für eine axiale Festlegung der Tragplatte 30 an dem Befestigungsbolzen 7 weist dieser gemäß Figur 6 ein einstückig ausgebildetes, angestauchtes Kragenelement 31 auf, sodass die Tragplatte 30 unverlierbar und axial im Wesentlich unverschiebbar auf dem Schaft 19 angeordnet ist, jedoch nicht derart klemmend festgelegt wird, dass keine Relativdrehung zwischen der Tragplatte 30 und dem Befestigungsbolzen 7 mehr möglich ist Für den Durchgriff des Befestigungsbolzen 7 durch die Tragplatte 30 ist letztere mit einer Bolzenöffnung 32 versehen, die in der Figur 6 nicht sichtbar ist, da sie vom Kragenelement 31 abgedeckt wird.

An der Unterseite 33 der Tragplatte 30 ist die bereits erwähnte Dichtung 34 befestigt, insbesondere dort angeklebt, wobei die Dichtung 34 als Ringdichtung 35 ausgebildet ist und aus einem elastischen Dichtwerkstoff, insbesondere Neopren, besteht. Aus der Figur 6 ist erkennbar, dass der Grundriss der Tragplatte 30 stadionförmig gestaltet ist, sodass auch die Dichtung 34 eine entsprechende Stadionform aufweist, wobei sie sich aufgrund ihrer Ringform nur in einer umlaufenden Randzone 36 der Tragplatte 30 befindet. Ferner ist der Figur 6 zu entnehmen, dass aufgrund der Ringform die Dichtung 34 zum Schaft 19 des Befestigungsbolzens 7 allseitig Abstand einhält.

Zur Festlegung der Befestigungseinrichtung 5 an der Dachleiste 1 wird -gemäß Figur 3- der Nutenstein 15 mit seinem Kopf 18 in die Aufnahmenut 16 -beginnend bei der Einfädelöffnung 27- axial eingeschoben, sodass die Stellung gemäß Figur 3 eingenommen wird. Hierbei liegt die Taille 29 an dem Randbereich der Zwischenwand 25 an und der Kopf 28 hintergreift die Zwischenwand 25, sodass bei axialem Zug des Befestigungsbolzens 7 eine entsprechende Mitnahme der Dachleiste 1 erfolgt. Um zu verhindern, dass der Nutenstein 15 im Zuge von Montagearbeiten wieder aus der Aufnahmenut 16 herausrutscht, ist -gemäß Figur 4- ein Sperrelement 37 vorgesehen, das reibschlüssig in den verbleibenden Teil der Aufnahmenut 16 eingeschoben wird. Es ist möglich, aber nicht notwendig, nunmehr verbleibende Volumen der Aufnahmenut mit Füllmasse, beispielsweise Silikon, zusätzlich zu füllen.

Aus den Figuren 3 und 4 wird deutlich, dass im befestigten Zustand des Befestigungsbolzens 7 an der Dachleiste 1 Teile der Oberseite, 38 (Figur 5) der Tragplatte 30 auf der Unterseite 6 der Dachleiste 1 aufliegt, wobei sich ferner die Unterseite 44 der Taille 29 des Nutensteins 15 ebenfalls an einem entsprechenden, zentralen Bereich der Oberseite 38 der Tragplatte 30 abstützt.

Gemäß Figur 4 kann an der Unterseite 6 der Dachleiste 1 eine elastische Unterlage 39 in Form von Neoprenstreifen 39 befestigt, insbesondere dort festgeklebt werden. Der endseitige Neoprenstreifen 39 ist in der Figur 4 abgeschnitten dargestellt, um das Sperrelement 37 sehen zu können. Der Neoprenstreifen 39 ist unterbrochen, wobei in der Unterbrechungsstelle 40 (Figur 4) die Tragplatte 30 mit Dichtung 34 liegt, wobei die Dicke der Dichtung 34 etwas größer ist als die Dicke der Unterlage 39.

Erfolgt nun eine Montage der mit Befestigungsbolzen 7 und Dichtungsanordnung versehenen Dachleiste am Dach 3 des Personenkraftwagens 4, so werden die Befestigungsbolzen 7 in die Dachöffnungen 8 eingeführt und die Dachleiste 1 mit ihrer Unterseite 6 in Richtung auf die Dachhaut 11 abgesenkt. Anschließend werden Mutterelemente 17 auf die Gewindeabschnitte 18 unter Zwischenschaltung von Unterlegscheiben 20 gemäß Figur 2 aufgeschraubt. Es wird deutlich, dass sich beim Festlegen der Dachleiste 1 zunächst die Dichtungen 34 an der Dachhaut 11 abstützen, wobei sie um die Dachöffnungen 8 herumverlaufen. Im Zuge des weiteren Festziehens wird die jeweilige Dichtung 34 leicht komprimiert. Im Zuge des weiteren Verschraubens tritt nunmehr die Unterlage 39 gegen die Dachhaut 11, sodass kein Spalt zwischen Dachleiste 1 und Dachhaut 11 verbleibt. Die Mutterelemente 17 werden derart stark angezogen, dass der Nutenstein 15 die Dachleiste 1 unter Zwischenschaltung von Tragplatte 30 und optional Kragenelement 31 fest gegen die Führung 15' zieht, wobei die Dichtung 34 elastisch mit geringerer Kraft als die Spannkraft für die Dachleistenbefestigüng komprimiert wird. Hierbei sind die Verhältnisse derart getroffen, dass die Dichtung 34 also nicht zu stark komprimiert wird, sodass eine Langzeitabdichtung sichergestellt ist.

Alternativ ist es zum Vorherstehenden möglich, dass sich auf der Oberseite 38 der Tragplatte 30 eine Foliendichtung befindet, so dass auch eine Abdichtung zwischen der Unterseite 44 des Nutensteins 15 und der Tragplatte 30 vorliegt. Alternativ kann auch vorgesehen sein, dass sich die Foliendichtung auf der Unterseite 44 des Nutensteins 15 befindet oder dass sowohl die Tragplatte 30 als auch der Nutenstein 15 eine entsprechende Dichtung, insbesondere Foliendichtung aufweist. Eine Foliendichtung oder eine entsprechende Dichtung wird bevorzugt deshalb eingesetzt, weil derartige Dichtungen gegenüber hohen Kraftdrücken unempfindlich ist und dennoch eine Abdichtung erfolgt.

Gemäß Figur 8 kann bei einer weiteren Ausführungsform einer Befestigungseinrichtung 5 im Unterschied zum Ausführungsbeispiel der Figur 5 zusätzlich vorgesehen sein, dass sich an der Unterseite 44 des Nutsteins 15 zusätzlich eine Ringvertiefung 45 befindet, in der eine ringförmige Zusatzdichtung 41 angeordnet ist. Der Unterseite 33 der Tragplatte 30 ist somit die Dichtung 34 und der Oberseite 38 der Tragplatte 30 ist die Zusatzdichtung 41 zugeordnet, die ebenfalls als Ringdichtung ausgebildet ist und den Schaft 19 des Befestigungsbolzens 7 ringförmig umgibt. Durch diese Maßnahme ist eine zusätzliche Abdichtung sichergestellt, sodass keine Feuchtigkeit von außen -entlang dem Schaft 19 des Befestigungsbolzens 7- in das Innere des Daches 3 des Fahrzeugs gelangen kann. Ausdrücklich soll jedoch hier festgehalten werden, dass auch bei dem Ausführungsbeispiel der Figuren 1 bis 7 das Eindringen von Feuchtigkeit ausgeschlossen ist. Durch die versenkte Lage der Zusatzdichtung gemäß Figur 8 ist ausgeschlossen, dass sie beim Verspannen zerquetscht wird. Sie weist im entspannten Zustand eine Dicke auf, die größer als die Tiefe der Ringvertiefung 45 ist.

## Patentansprüche

1. Dachträgersystem für ein Fahrzeug, insbesondere für einen Personenkraftwagen, mit mindestens einem Dachträger, der eine Befestigungseinrichtung zur Festlegung auf dem Dach des Fahrzeugs aufweist, die zum Durchgreifen von mindestens einer Dachöffnung mindestens einen Befestigungsbolzen besitzt, dem eine sich um den Befestigungsbolzen (7) erstreckende und sich bei montiertem Dachträger am Dach (3) abstützende und dabei die Dachöffnung (8) umgebende Dichtung (34) zugeordnet ist, **dadurch gekennzeichnet daß** die Dichtung (34) einer Tragplatte (30) zugeordnet ist, die eine Bolzenöffnung (32) aufweist, welche vom Befestigungsbolzen (7) durchsetzt wird, wobei die Tragplatte (30) axial unverschiebbar oder axial nur in einer Verschiebezone verschiebbar an dem Befestigungsbolzen (7) festgelegt ist.

2. Dachträgersystem nach Anspruch 1, **dadurch gekennzeichnet, dass** die Dichtung (34) eine Ringdichtung (35) ist.

3. Dachträgersystem nach einem der vorhergehenden Ansprüche, **dadurch gekennzeichnet, dass** die Tragplatte (30) eine Metallblechplatte ist.

4. Dachträgersystem nach Anspruch 3, **dadurch gekennzeichnet, dass** die Metallblechplatte eine Edelstahlblechplatte ist.

5. Dachträgersystem nach einem der vorhergehenden Ansprüche, **dadurch gekennzeichnet, dass** die Tragplatte (30) als Blechstanzteil ausgebildet ist.

6. Dachträgersystem nach einem der vorhergehenden Ansprüche, **dadurch gekennzeichnet, dass** die Tragplatte (30) an ihrer Unterseite (33) die Dichtung (34) aufweist.

7. Dachträgersystem nach einem der vorhergehenden Ansprüche, **dadurch gekenntzeichnet, dass** die Dichtung (34) an einer umlaufenden Randzone (36) der Tragplatte (30), insbesondere an deren Unterseite (33), angeordnet ist.

8. Dachträgersystem nach einem der vorhergehenden Ansprüche, **dadurch gekennzeichnet, dass** die Dichtung (34) mit der Tragplatte (30) verklebt ist.

9. Dachträgersystem nach einem der vorhergenden Ansprüche, **dadurch gekennzeichnet, dass** die Festlegung mittels mindestens einer Querschnittsverdickung des Befestigungsbolzens (7) erfolgt.

10. Dachträgersystem nach Anspruch 9, **dadurch gekennzeichnet, dass** die Querschnittsverdickung von einem separaten, an dem Befestigungsbolzen (7) festgelegten oder mit dem Befestigungsbolzen (7) einstückig ausgebildeten Kragenelement (31) gebildet ist.

11. Dachträgersystem nach einem der vorhergehenden Ansprüche, **dadurch gekennzeichnet, dass** der Befestigungsbolzen (7) ein Stehbolzen ist.

12. Dachträgersystem nach Anspruch 11, **dadurch gekennzeichnet, dass** der Stehbolzen ein Gewindestehbolzen ist.

13. Dachträgersystem nach einem der vorhergehenden Ansprüche, **dadurch gekenntzeichnet, dass** der Befestigungsbolzen (7) ein Halteelement (12), insbesondere einen Nutenstein (15), aufweist, das/der am Dachträger befestigt/befestigbar ist, insbesondere eine Haltezone (14) des Dachträgers hintergreift.

14. Dachträgersystem nach Anspruch 13, **dadurch gekennzeichnet, dass** die Grundrissfläche der Tragplatte (30) größer als die Grundrissfläche des Halteelements (12) ist, mit der sich dieses an der Tragplatte (30) direkt oder indirekt abstützt.

15. Dachträgersystem nach einem der vorhergehenden Ansprüche 13 oder 14, **dadurch gekennzeichnet, dass** im montierten Zustand der Nutenstein (15) die Oberseite (38) der Tragplatte (30) direkt oder indirekt beaufschlagt.

16. Dachträgersystem nach einem der vorhergehenden Ansprüche 13 bis 15, **dadurch gekennzeichnet, dass** sich zwischen dem Nutenstein (15) und der Tragplatte eine Zusatzdichtung (41) befindet.

17. Dachträgersystem nach Anspruch 16, **dadurch gekennzeichnet, dass** die Zusatzdichtung (41) auf der Oberseite (38) der Tragplatte (30) befestigt, insbesondere dort aufgeklebt ist.

18. Dachträgersystem nach einem der vorhergehenden Ansprüche 16 oder 17, **dadurch gekennzeichnet, dass** die Zusatzdichtung (41) eine Zusatzringdichtung ist.

19. Dachträgersystem nach einem der vorhergehenden Ansprüche 16 bis 18, **dadurch gekenntzeichnet, dass** die Zusatzdichtung (41) eine Foliendichtung ist.

20. Dachträgersystem nach einem der vorhergehenden Ansprüche 16 bis 19, **dadurch gekennzeichnet, dass** die Zusatzdichtung (41) an einer umlaufenden Randzone der Tragplatte (30), insbesondere an deren Oberseite (38), angeordnet ist.

21. Dachträgersystem nach einem der vorhergehenden Ansprüche 16 bis 20, **dadurch gekennzeichnet, dass** das Halteelement (12) auf seiner der Tragplatte (30) zugewandten Seite eine Ringvertiefung (45) aufweist, die um den Befestigungsbolzen (7) herumläuft und in der die Zusatzdichtung (41) derart einliegt oder dort befestigt ist, dass sie im entspannten Zustand die Seite des Halteelements (12) überragt.

22. Dachträgersystem nach einem der vorhergehenden Ansprüche 16 bis 21, **dadurch gekennzeichnet, dass** die Dichtung (34) und die Zusatzdichtung (41) eine gemeinsame Dichtung bilden.

23. Dachträgersystem nach Anspruch 22, **dadurch gekennzeichnet, dass** die gemeinsame Dichtung die Randkante der Tragplatte (30) umgreift, so dass auf der Unterseite (33) und Oberseite (38) der Tragplatte (30) jeweils ein Dichtungsring ausgebildet ist.

24. Dachträgersystem nach einem der vorhergehenden Ansprüche 13 bis 23, **dadurch gekennzeichnet, dass** der Nutenstein (15) in einer Aufnahmenut (16) des Dachträgers eingeschoben ist.

25. Dachträgersystem nach einem der vorhergehenden Ansprüche, **dadurch gekennzeichnet, dass** im montiertem Zustand der dem Dach (3) zugewandten Unterseite (6) des Dachträgers eine elastische Unterlage (39) zugeordnet ist.

26. Dachträgersystem nach einem der vorhergehenden Ansprüche oder nach einem der vorhergehenden Ansprüche 16 bis 25, **dadurch gekennzeichnet, dass** die Dicke der Dichtung (34) und/oder der Zusatzdichtung (41) größer als die Dicke der elastischen Unterlage (39) ist.

27. Dachträgersystem nach einem der vorhergehenden Ansprüche, **dadurch gekennzeichnet, dass** der Dachträger eine Dachleiste (1) ist.

28. Dachträgersystem nach einem der vorhergehenden Ansprüche, **dadurch gekennzeichnet, dass** der Dachträger eine Dachreling ist.

29. Dachträgersystem nach einem der vorhergehenden Ansprüche oder nach einem der vorhergehenden Ansprüche 16 bis 28 oder nach einem der vorhergehenden Ansprüche 25 bis 28, **dadurch gekennzeichnet, dass** die Dichtung (34) und/oder die Zusatzdichtung (41) und/oder die elastische Unterlage (39) aus Neopren und/oder Dichtfolie besteht/bestehen.

## Claims

1. Roof rack system for a motor vehicle, specifically for a passenger car, having at least one roof rack which has an attaching device for location on the roof of the vehicle which has at least one mounting bolt to pass through at least one roof opening, to which a seal (34) is assigned extending around the mounting bolt (7) and resting on the roof (3) when the roof rack is installed and thereby surrounding the roof opening (8), **characterized in that** the seal (34) is assigned to a carrier plate (30) which has a bolt opening (32) through which the mounting bolt (7) passes, wherein the carrier plate (30) is located on the mounting bolt (7) not axially displaceable or axially displaceable only in a displacement zone.

2. Roof rack system according to claim 1, **characterized in that** the seal (34) is an annular seal (35).

3. Roof rack system according to one of the preceding claims, **characterized in that** the carrier plate (30) is a sheet metal plate.

4. Roof rack system according to claim 3, **characterized in that** the sheet metal plate is a stainless steel plate.

5. Roof rack system according to one of the preceding claims, **characterized in that** the carrier plate (30) is configured as a stamped sheet metal part.

6. Roof rack system according to one of the preceding claims, **characterized in that** the carrier plate (30) has the seal (34) on its underside (33).

7. Roof rack system according to one of the preceding claims, **characterized in that** the seal (34) is located on a circumferential edge zone (36) of the carrier plate (30), specifically on its underside (33).

8. Roof rack system according to one of the preceding claims, **characterized in that** the seal (34) is glued to the carrier plate (30).

9. Roof rack system according to one of the preceding claims, **characterized in that** the location is effected by means of at least one thickening in the cross-section of the mounting bolt (7).

10. Roof rack system according to claim 9, **characterized in that** the thickening in the cross-section is formed by a separate collar element (31) located on the mounting bolt (7) or formed in one piece with the mounting bolt (7).

11. Roof rack system according to one of the preceding claims, **characterized in that** the mounting bolt (7) is a stud bolt.

12. Roof rack system according to claim 11, **characterized in that** the stud bolt is a threaded stud bolt.

13. Roof rack system according to one of the preceding claims, **characterized in that** the mounting bolt (7) has a retaining element (12), specifically a slot nut (15), which is attached/can be attached to the roof rack, specifically engages a retaining zone (14) of the roof rack from behind.

14. Roof rack system according to claim 13, **characterized in that** the ground area of the carrier plate (30) is larger than the ground area of the retaining element (12) with which the latter supports itself directly or indirectly against the carrier plate (30).

15. Roof rack system according to one of the preceding claims 13 or 14, **characterized in that** the slot nut (15) bears directly or indirectly against the upper side (38) of the carrier plate (30) in the assembled state.

16. Roof rack system according to one of the preceding claims 13 to 15, **characterized in that** a supplementary seal (41) is located between the slot nut (15) and the carrier plate.

17. Roof rack system according to claim 16, **characterized in that** the supplementary seal (41) is attached on the upper side (38) of the carrier plate (30), specifically is glued onto it.

18. Roof rack system according to one of the preceding claims 16 or 17, **characterized in that** the supplementary seal (41) is a supplementary annular seal.

19. Roof rack system according to one of the preceding claims 16 to 18, **characterized in that** the supplementary seal (41) is a film seal.

20. Roof rack system according to one of the preceding claims 16 to 19, **characterized in that** the supplementary seal (41) is located on a circumferential edge zone of the carrier plate (30), specifically on its upper side (38).

21. Roof rack system according to one of the preceding claims 16 to 20, **characterized in that** the retaining element (12) has an annular depression (45) on the side facing the carrier plate (30) which runs around the mounting bolt (7) and in which the supplementary seal (41) lies or is attached there in such a way that in the relaxed state it projects beyond the side of the retaining element (12).

22. Roof rack system according to one of the preceding claims 16 to 21, **characterized in that** the seal (34) and the supplementary seal (41) form a joint seal.

23. Roof rack system according to claim 22, **characterized in that** the joint seal enfolds the lateral edge of the carrier plate (30) so that a sealing ring is formed on each, the underside (33) and the upper side (38) of the carrier plate (30).

24. Roof rack system according to one of the preceding claims 13 to 23, **characterized in that** the slot nut (15) is inserted in a locating groove (16) of the roof rack.

25. Roof rack system according to one of the preceding claims, **characterized in that** in the assembled state an elastic underlayer (39) is allocated to the underside (6) of the roof rack facing the roof (3).

26. Roof rack system according to one of the preceding claims or according to one of the preceding claims 16 to 25, **characterized in that** the thickness of the seal (34) and/or the supplementary seal (41) is greater than the thickness of the elastic underlayer (39).

27. Roof rack system according to one of the preceding claims, **characterized in that** the roof rack is a roof rail (1).

28. Roof rack system according to one of the preceding claims, **characterized in that** the roof rack is a roof railing.

29. Roof rack system according to one of the preceding claims or according to one of the preceding claims 16 to 28 or according to one of the preceding claims 25 to 28, **characterized in that** the seal (34) and/or the supplementary seal (41) and/or the elastic underlayer (39) consists/consist of neoprene and/or sealing film.

## Revendications

1. Système de galerie porte-bagages de toit pour un véhicule, en particulier pour une voiture de tourisme, comprenant au moins une galerie porte-bagages de toit qui présente un dispositif de fixation pour la fixation au toit du véhicule, lequel dispositif de fixation possède au moins un boulon de fixation pour la pénétration d'au moins une ouverture de toit, auquel est associé un joint (34) entourant le boulon de fixation (7), s'appuyant sur le toit (3) en cas de porte-bagages de toit monté et entourant ce faisant l'ouverture de toit (8), **caractérisé en ce que** le joint (34) est associé à une plaque d'appui (30) qui présente une ouverture de boulon (32) qui est traversée par le boulon de fixation (7), dans lequel la plaque d'appui (30) est fixée au boulon de fixation (7) de manière à ne pas pouvoir coulisser axialement ou à pouvoir coulisser axialement uniquement dans une zone de coulissement.

2. Système de galerie porte-bagages de toit selon la revendication 1, **caractérisé en ce que** le joint (34) est un joint annulaire (35).

3. Système de galerie porte-bagages de toit selon l'une quelconque des revendications précédentes, **caractérisé en ce que** la plaque d'appui (30) est une plaque en tôle métallique.

4. Système de galerie porte-bagages de toit selon la revendication 3, **caractérisé en ce que** la plaque en tôle métallique est une plaque en tôle d'acier spécial.

5. Système de galerie porte-bagages de toit selon l'une quelconque des revendications précédentes, **caractérisé en ce que** la plaque d'appui (30) est réalisée en tant que pièce découpée en tôle.

6. Système de galerie porte-bagages de toit selon l'une quelconque des revendications précédentes, **caractérisé en ce que** la plaque d'appui (30) présente le joint (34) sur son côté inférieur (33).

7. Système de galerie porte-bagages de toit selon l'une quelconque des revendications précédentes, **caractérisé en ce que** le joint (34) est disposé sur une zone de bordure périphérique (36) de la plaque d'appui (30), notamment sur son côté inférieur (33).

8. Système de galerie porte-bagages de toit selon l'une quelconque des revendications précédentes, **caractérisé en ce que** le joint (34) est collé à la plaque d'appui (30).

9. Système de galerie porte-bagages de toit selon l'une quelconque des revendications précédentes, **caractérisé en ce que** la fixation s'effectue au moyen d'au moins un épaississement transversal du boulon de fixation (7).

10. Système de galerie porte-bagages de toit selon la revendication 9, **caractérisé en ce que** l'épaississement transversal est formé par un élément de col séparé (31) fixé au boulon de fixation (7) ou réalisé d'une pièce avec le boulon de fixation (7).

11. Système de galerie porte-bagages de toit selon l'une quelconque des revendications précédentes, **caractérisé en ce que** le boulon de fixation (7) est un goujon.

12. Système de galerie porte-bagages de toit selon la revendication 11, **caractérisé en ce que** le goujon est un goujon fileté.

13. Système de galerie porte-bagages de toit selon l'une quelconque des revendications précédentes, **caractérisé en ce que** le boulon de fixation (7) présente un élément de retenue (12), notamment un coulisseau (15), qui est fixé/peut être fixé à la galerie porte-bagages de toit, notamment s'engrène avec une zone de retenue (14) de la galerie porte-bagages de toit.

14. Système de galerie porte-bagages de toit selon la revendication 13, **caractérisé en ce que** la surface en plan de la plaque d'appui (30) est supérieure à la surface en plan de l'élément de retenue (12) avec laquelle celui-ci s'appuie directement ou indirectement sur la plaque d'appui (30).

15. Système de galerie porte-bagages de toit selon l'une quelconque des revendications précédentes 13 ou 14, **caractérisé en ce que** le coulisseau (15) sollicite directement ou indirectement le côté supérieur (38) de la plaque d'appui (30) à l'état monté.

16. Système de galerie porte-bagages de toit selon l'une quelconque des revendications précédentes 13 à 15, **caractérisé en ce qu'**un joint supplémentaire (41) se trouve entre le coulisseau (15) et la plaque d'appui.

17. Système de galerie porte-bagages de toit selon la revendication 16, **caractérisé en ce que** le joint supplémentaire (41) est fixé au côté supérieur (38) de la plaque d'appui (30), notamment y est collé.

18. Système de galerie porte-bagages de toit selon l'une quelconque des revendications précédentes 16 ou 17, **caractérisé en ce que** le joint supplémentaire (41) est un joint annulaire supplémentaire.

19. Système de galerie porte-bagages de toit selon l'une quelconque des revendications précédentes 16 à 18, **caractérisé en ce que** le joint supplémentaire (41) est un joint de film.

20. Système de galerie porte-bagages de toit selon l'une quelconque des revendications précédentes 16 à 19, **caractérisé en ce que** le joint supplémentaire (41) est disposé sur une zone de bordure périphérique de la plaque d'appui (30), notamment sur son côté supérieur (38).

21. Système de galerie porte-bagages de toit selon l'une quelconque des revendications précédentes 16 à 20, **caractérisé en ce que** l'élément de retenue (12) présente une cavité annulaire (45) sur son côté tourné vers la plaque d'appui (30) qui entoure le boulon de fixation (7) et dans laquelle le joint supplémentaire (41) s'insère ou y est fixé de telle sorte qu'il dépasse du côté de l'élément de retenue (12) à l'état desserré.

22. Système de galerie porte-bagages de toit selon l'une quelconque des revendications précédentes 16 à 21, **caractérisé en ce que** le joint (34) et le joint supplémentaire (41) forment un joint commun.

23. Système de galerie porte-bagages de toit selon la revendication 22, **caractérisé en ce que** le joint commun entoure l'arête de bordure de la plaque d'appui (30) de sorte qu'un anneau d'étanchéité est à chaque fois réalisé sur le côté inférieur (33) et le côté supérieur (38) de la plaque d'appui (30).

24. Système de galerie porte-bagages de toit selon l'une quelconque des revendications précédentes 13 à 23, **caractérisé en ce que** le coulisseau (15) est inséré dans une rainure de réception (16) de la galerie porte-bagages de toit.

25. Système de galerie porte-bagages de toit selon l'une quelconque des revendications précédentes, **caractérisé en ce qu'**un support élastique (39) est associé au côté inférieur (6) de la galerie porte-bagages de toit tourné vers le toit (3) à l'état monté.

26. Système de galerie porte-bagages de toit selon l'une quelconque des revendications précédentes ou selon l'une quelconque des revendications précédentes 16 à 25, **caractérisé en ce que** l'épaisseur du joint (34) et/ou du joint supplémentaire (41) est supérieure à l'épaisseur du support élastique (39).

27. Système de galerie porte-bagages de toit selon l'une quelconque des revendications précédentes, **caractérisé en ce que** la galerie porte-bagages de toit est une barre de toit (1).

28. Système de galerie porte-bagages de toit selon l'une quelconque des revendications précédentes, **caractérisé en ce que** la galerie porte-bagages de toit est une galerie de toit.

29. Système de galerie porte-bagages de toit selon l'une quelconque des revendications précédentes ou selon l'une quelconque des revendications précédentes 16 à 28 ou selon l'une quelconque des revendications 25 à 28, **caractérisé en ce que** le joint (34) et/ou le joint supplémentaire (41) et/ou le support élastique (39) se compose(nt) de néoprène et/ou d'un film d'étanchéité.
